Europäisches Patentamt

European Patent Office

Office européen des brevets

(11) Veröffentlichungsnummer: **0 398 082**
**A1**

## (12) EUROPÄISCHE PATENTANMELDUNG

(21) Anmeldenummer: **90108382.4**

(22) Anmeldetag: **03.05.90**

(51) Int. Cl.5: **G02B 3/00, G02B 3/08,
B23K 26/06, B23K 26/08**

(30) Priorität: **19.05.89 DE 3916351**

(43) Veröffentlichungstag der Anmeldung:
**22.11.90 Patentblatt 90/47**

(84) Benannte Vertragsstaaten:
**AT BE CH DE ES FR GB GR IT LI LU NL SE**

(71) Anmelder: **Siemens Aktiengesellschaft
Wittelsbacherplatz 2
D-8000 München 2(DE)**

(72) Erfinder: **Mahlein, Hans, Dr.
Queristrasse 2
D-8025 Unterhaching(DE)**
Erfinder: **März, Reinhard, Dr.
Comeniusstrasse 4
D-8000 München 80(DE)**

(54) **Verfahren zur Herstellung einer optischen Linse.**

(57) Es wird ein Verfahren zur Herstellung einer optischen Linse beschrieben, mit dem auf einfache Weise hochbrechende Einzellinsen sehr kleinen Durchmessers erzeugbar sind, die insbesondere hervorragend zur Kopplung integrierter Wellenleiter mit Glasfaser-Lichtwellenleitern bei geringem Justieraufwand geeignet sind.

Dazu wird aus einer Oberfläche (10) eines Substrats (1) ein Linsenprofil (30) mittels eines Energiestrahl-Material-Abtragverfahrens herausgeformt, bei dem mit Hilfe eines Energiestrahls (5) Material abgetragen wird, wobei der Materialabtrag im wesentlichen nur im Bereich des Strahls (5) erfolgt.

Anwendung für integriert-optische Komponenten.

**FIG 3**

EP 0 398 082 A1

Die Erfindung betrifft gemäß dem Oberbegriff des Patentanspruchs 1 ein Verfahren zur Herstellung einer optischen Linse.

Die effiziente optische Kopplung zwischen dem eine typische Querschnittsabmessung von 1 μm und eine Brechzahl von etwa 3,3 aufweisenden Ein- bzw. Ausgangswellenleiter einer integriert-optischen Schaltung auf Halbleiterbasis, z.B. (In, Ga) (As, P) auf InP, und der das Licht zu- bzw. fortführenden und eine typische Kern-Querschnittsabmessung von 9 μm sowie eine Brechzahl von etwa 1,45 aufweisenden Monomode-Glasfaser stellt wegen der unterschiedlichen Querschnitte, numerischen Aperturen und Brechzahlen der beiden zu koppelnden Wellenleiterarten ein bisher nicht befriedigend gelöstes Problem dar.

Es sind zwar Anordnungen mit zwei diskreten Linsen bekannt (siehe H. Karstensen: Laser Diode to Single-Mode Fiber Coupling with Ball Lenses, J. Opt. Commun. 9 (1988) S. 42) die bei exakter Justierung eine exakte Kopplung zwischen dem integrierten Wellenleiter auf dem integriert-optischen Chip und der Glasfaser ermöglichen, zur Justierung ist jedoch eine präzise mikrooptische Bank erforderlich, auf die die Linsen und zu verkoppelnden Bauteile exakt und unverrückbar befestigt werden müssen. Einfachere Anordnungen mit einer Einzellinse erfordern hochbrechende Linsen mit sehr kleinem Durchmesser von beispielsweise weniger als 50 μm, die bisher nur schwer herstellbar sind.

Aufgabe der Erfindung ist es, ein Verfahren der eingangs genannten Art anzugeben, mit dem auf einfache Weise hochbrechende Einzellinsen sehr kleinen Durchmessers erzeugbar sind, die insbesondere hervorragend zur Kopplung integrierter Wellenleiter mit Glasfaser-Lichtwellenleitern bei geringem Justieraufwand geeignet sind.

Diese Aufgabe wird durch die im kennzeichnenden Teil des Patentanspruchs 1 angegebenen Merkmale gelöst.

Bevorzugte und vorteilhafte Ausgestaltungen des erfindungsgemäßen Verfahrens gehen aus den Unteransprüchen hervor.

Ein besonderer Vorteil des erfindungsgemäßen Verfahrens liegt darin, daß viele Linsen gleichzeitig in einem Arbeitsgang hergestellt werden können, daß viele Linsen, insbesondere auch nichtspärische Linsen, entspiegelt werden können, daß die Möglichkeit gegeben ist, viele Linsen in einem Arbeitsschritt zu justieren und fertige Module herzustellen, die gemeinsam mit ihrer Koppeloptik auf einem gemeinsamen Subträger montierbar und durch schonende Verfahren, z.B. Laserschneiden und Trockenätzen, vereinzelbar sind. Die erfindungsgemäß hergestellten Linsen sind vorteilhafterweise auch für die Kopplung zwischen einem Laser und einer Faser geeignet.

Die Erfindung wird anhand der Figuren in der nachfolgenden Beschreibung beispielhaft näher erläutert. Von den Figuren zeigen:

Figur 1 bis 7 der Reihe nach jeweils im Schnitt eine Ausgangsstufe, verschiedene Zwischenstufen und eine Endstufe, die bei der Durchführung eines Verfahrensbeispiels zur Herstellung einer rotationssymmetrischen Sammellinse nach verschiedenen Verfahrensschritten entstehen,

Figuren 8 bis 11 der Reihe nach jeweils im Schnitt eine Ausgangsstufe, verschiedene Zwischenstufen und eine Endstufe, die bei der Durchführung eines Verfahrensbeispiels zur Herstellung einer rotationssymmetrischen sammelnden Stufenprofillinse nach verschiedenen Verfahrensschritten entstehen,

Figuren 12 bis 15 eine Vielzahl von Koppelanordnungen in Draufsicht bzw. in Schnitten längs den Schnittlinien I - I, II - II und III - III in Figur 12 bzw. Figur 13, und

Figur 16 den strichpunktiert umrahmten Bereich 9 in Figur 15 in vergrößerter Darstellung und ergänzt durch eine Monomode-Glasfaser, die über eine Linse an einen integrierten Wellenleiter gekoppelt ist.

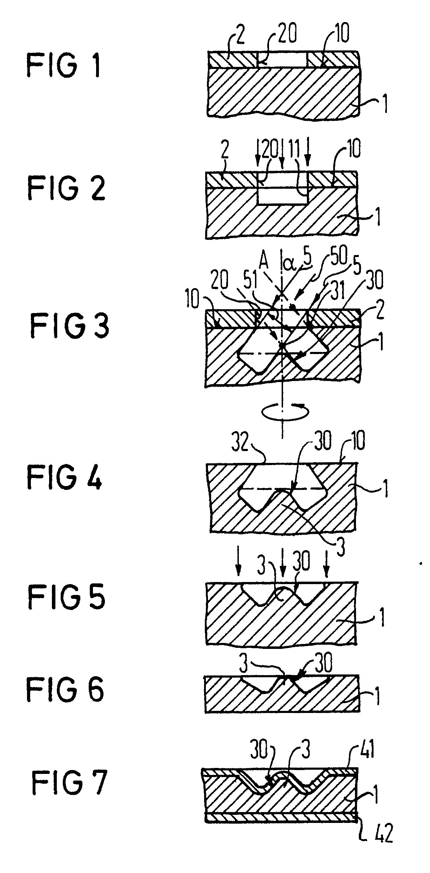

Die Ausgangsstufe nach Figur 1 besteht aus dem Substrat 1 aus z.B. Silizium, auf dessen Oberfläche 10 eine Ätzmaske 2 mit einer beispielsweise kreisförmigen Öffnung 20 aufgebracht ist: Das Substratmaterial kann aus jedem beliebigen Material geeignet hoher Brechzahl bestehen, das durch ein Energiestrahl-Materialabtragverfahren bearbeitbar ist. Geeignet als solche Verfahren sind beispielsweise das allgemein bekannte Ionenstrahlätzen und das allgemein bekannte laserinduzierte Ätzen.

Zumindest bei Verwendung des Ionenstrahlätzens ist eine Aperturblende als Schattenblende zum Ausblenden und Erzeugen eines Schattenwurfes erforderlich, die zweckmäßigerweise durch die Ätzmaske 2 realisiert wird, in der z.B. mittels konventioneller Photolithographie vorzugsweise ein zweidimensionales Array von Öffnungen 20 hergestellt wird. Bei Verwendung des laserinduzierten Ätzens kann auf eine Ätzmaske 2 verzichtet werden, weil ein Laserstrahl mit geeignet begrenztem Querschnitt verwendet werden kann und der Materialabtrag nur im Bereich des Strahls erfolgt.

Bei Verwendung einer Ätzmaske 2 mit Öffnungen 20 ist es zur Erzielung einer verbesserten Schattengeometrie bei Ätzen unter schrägem Einfallswinkel zweckmäßig, zunächst unter einer Öffnung 20 eine Vertiefung 11 in der Oberfläche 10 des Substrats 1 zu erzeugen, wie sie in Figur 2 gezeigt ist. Diese Vertiefung 11 kann durch Ätzen bei einem Strahleinfall senkrecht zur Oberfläche 10 erzeugt werden.

Zur Herstellung der rotationssymmetrischen Sammellinse wird nach Figur 3 unter einem be-

stimmten Einfallswinkel $\alpha$ zu einer auf der Oberfläche 10 senkrecht stehenden Achse A bestrahlt. Während der Bestrahlung werden der Strahl und das Substrat 1 um die Achse A relativ zueinander gedreht, beispielsweise so, daß der Strahl ruht und das Substrat 1 um die Achse A relativ zum ruhenden Strahl gedreht wird.

In der Figur 3 ist nur der durch die Öffnung 20 hindurchgehende Strahlausschnitt aus dem schrägen Strahl dargestellt, der im folgenden als Strahl 5 bezeichnet wird. Dieser Strahl 5 hat den begrenzten Querschnitt 51. Nur im Bereich dieses Querschnitts 51 und in Richtung 50 des Strahls 5 wird das Substrat 1 in die Tiefe geätzt.

Bei der relativen Rotation zwischen dem Substrat 1 und dem schrägen Strahl 5 um die Achse A entsteht ab Erreichen einer bestimmten Ätztiefe allmählich das bezüglich der Achse A rotationssymmetrische Linsenprofil 30 mit der zentralen buckelförmigen Erhebung, welches die zu erzeugende Sammellinse 3 definiert. Die bestimmte Tiefe ist durch die Spitze des kegelförmigen Schattenbereichs 31 definiert, der vom Strahl 5 umschrieben wird und in dessen Bereich die buckelförmige Erhebung entsteht, weil dort im wesentlichen nicht geätzt wird.

Die Form des Linsenprofils 30 kann durch den Einfallswinkel des Strahls 5 durch Veränderung, beispielsweise Verkleinern oder Vergrößern des Einfallswinkels $\alpha$ während des Ätzens, Änderung der Ätzrate während des Ätzens, Übergang zwischen Parallelstrahlenbündeln, schwach konvergenten oder/und schwach divergenten Strahlenbündeln, oder auch zwischenzeitliches seitliches Abtragen der seitlichen Begrenzung der beim Ätzen entstehenden Vertiefung geeignet beeinflußt werden. Auch durch örtliche variierende Strahlungsintensität, die einen örtlich variierenden Abtrag bewirkt, kann das Linsenprofil beeinflußt werden, wobei auch bei senkrechtem Strahleinfall, d.h. bei Einfallswinkel $\alpha = 0°$ gearbeitet werden könnte.

Wird ein Strahl 5 in Form eines Parallelstrahlenbündels verwendet, ist es nicht notwendig, daß die Achse A durch das Zentrum der Öffnung 20 geht. Mit einem solchen Bündel, das sich vorzugsweise über ein gesamtes Array von Öffnungen 20 erstreckt, können viele gleiche Linsen gleichzeitig hergestellt werden.

Nach dem Herstellen des Linsenprofils wird zweckmäßigerweise die Ätzmaske 2, beispielsweise durch naßchemisches Ätzen, welches nur das Material der Maske 2 und nicht des Substrats 1 angreift, von der Oberfläche 10 entfernt, wodurch die in Figur 4 dargestellte Zwischenstufe entsteht.

Wurde eine Vertiefung 11 nach Figur 2 verwendet, kann die Ätzmaske 2 bereits vor der Erzeugung des Linsenprofils 30 entfernt werden. In diesem Fall wirkt der Rand der Öffnung 11 anstelle der Maske 2 als Schattenblende.

Zur Entfernung einer über dem Linsenprofil 30 befindlichen und eventuell störenden ringförmigen Verengung 32 kann die Oberfläche 10 neben dem Linsenprofil 30 bis zu einer gewünschten Tiefe abgetragen werden, wonach das in Figur 5 dargestellte Gebilde entsteht. Dieses Abtragen kann durch Ionenstrahlätzen oder laseraktiviertes Ätzen bei senkrechtem Strahleinfall oder flachem Strahleinfall, d.h. großem Einfallswinkel $\alpha$ erfolgen. Bei senkrechtem Strahleinfall kann das Linsenprofil geringfügig abgeändert werden. Dies kann ein erwünschter oder unerwünschter Effekt sein.

Das Substrat 1 kann gegebenenfalls beispielsweise durch Läppen auf geeignete Dicke reduziert werden, wodurch die in Figur 6 dargestellte Form entsteht.

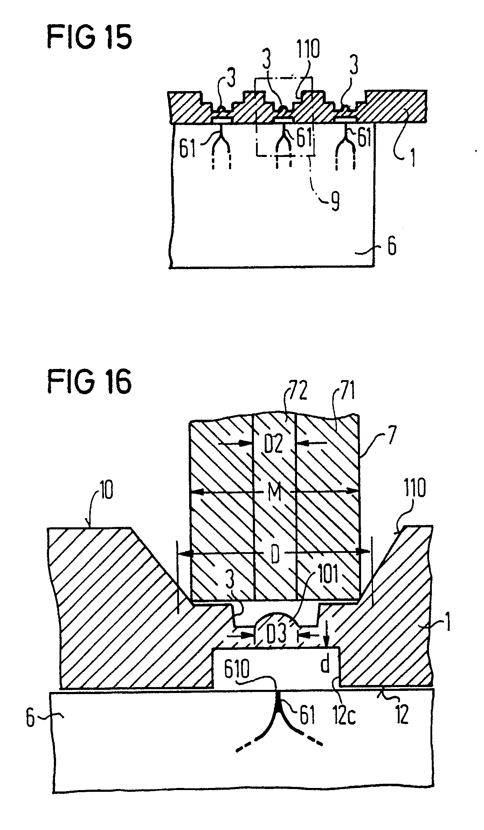

Es kann auch zweckmäßig sein, auf der vom Linsenprofil 30 abgekehrten Seite des Substrats 1 eine Ausnehmung 120 vorzusehen, die den Arbeitsabstand d der Linse 3 bestimmt, wie dies in der Figur 16 beispielhaft dargestellt ist.

Die Linse 3 kann auch mit einem Antireflexbelag, beispielsweise mit Antireflexschichten 41, 42 beschichtet werden, die in der Figur 7 dargestellt sind und beispielsweise durch Bedampfen im Vakuum mit niedrig brechendem Material hergestellt werden können.

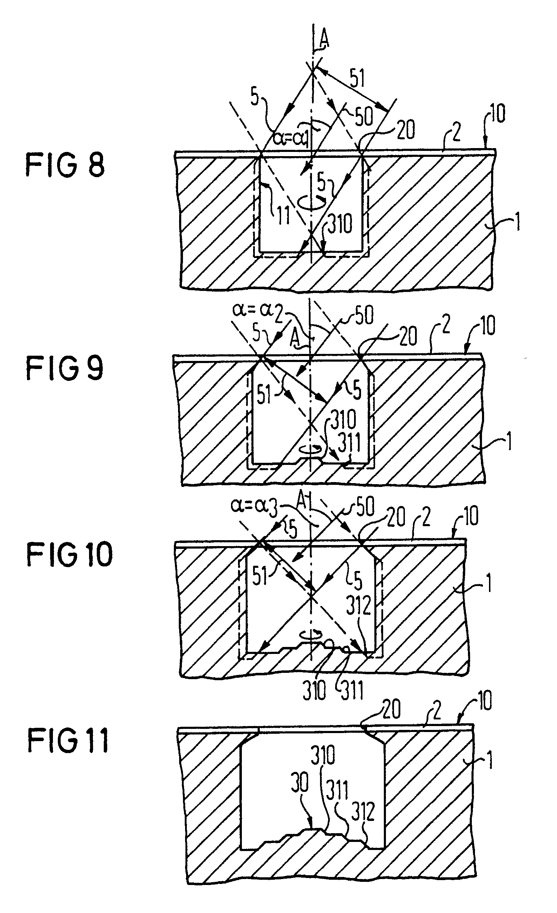

Die Form des Linsenprofils kann insbesondere durch kontinuierliche oder stufenweise Variation des Einfallswinkels $\alpha$ des Strahls bestimmt werden. So kann eine rotationssymemtrische Stufenprofillinse durch schrittweises Vergrößern des Einfallswinkels $\alpha$ hergestellt werden. Beispielsweise kann eine dreistufige Linse wie folgt hergestellt werden: Zunächst wird unter einem Einfallswinkel $\alpha = \alpha_1$ im Boden der Vertiefung 11 eine erste zentrale kreisförmige Stufe 310 erzeugt, wie sie in Figur 9 dargestellt ist. Danach wird unter einem größeren Einfallswinkel $\alpha = \alpha_2$ eine zweite zentrale kreisförmige Stufe 311 größeren Durchmessers erzeugt, die in Figur 10 dargestellt ist und die höhere Stufe 310 umgibt. Danach wird unter einem noch größeren Einfallswinkel $\alpha = \alpha_3$ eine dritte kreisförmige Stufe 312 noch größeren Durchmessers erzeugt, welche die erste und zweite höhere Stufe 310, 311 umgibt, und wodurch das stufenförmige Linsenprofil 30 nach Figur 11 entsteht.

Bei kontinuierlicher oder quasikontinuierlicher Veränderung des Einfallswinkels $\alpha$ entstehen anstelle von Stufenprofilen glatte Linsenprofile. Auch konkave Linsenprofile anstelle der in den Figuren dargestellten konvexen Profile 30 lassen sich herstellen.

Es können mit dem erfindungsgemäßen Verfahren auch nichtsphärische Linsen realisiert werden, die technisch interessant sind. Beispielsweise kann eine nichtsphärische Linse mit einer Schattenblende hergestellt werden, deren Öffnung oder Öffnungen nicht kreisförmig, sondern beispielsweise elliptisch ist bzw. sind.

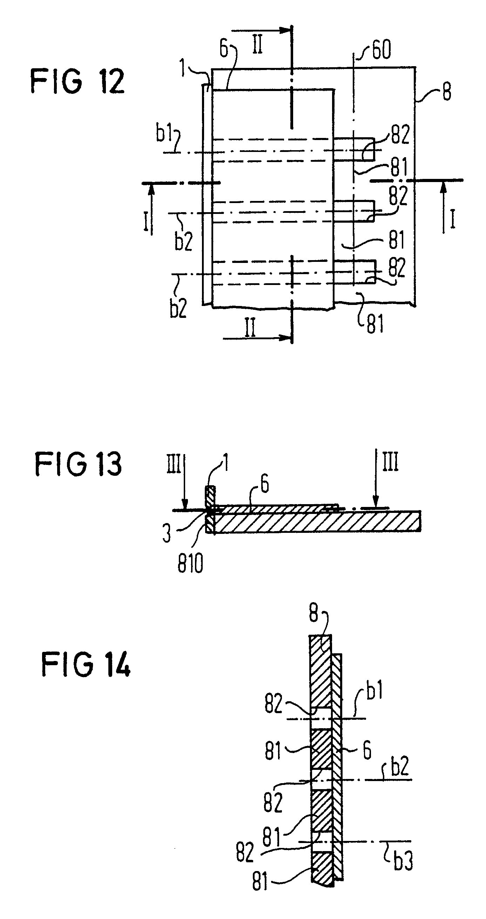

Einzelne Module, jeweils bestehend aus einem integriert optischen Chip mit integriertem Wellenleiter 61 zum Ein- oder Auskoppeln und einer aus einer Linse 3 bestehenden Koppeloptik lassen sich auf einfache Weise wie folgt herstellen, wobei auf die Figuren 12 bis 16 Bezug genommen wird.

Auf einen kammförmigen Subträgerkörper 8 wird ein Chiparray 6 so aufgebracht, daß ein integrierter Wellenleiter 61 jedes Chips über einem zugeordneten Kammzinken 81 des Subträgers 8 angeordnet ist und seine Stirnfläche 610 etwa in der Ebene der Stirnflächen 810 der Kammzinken 81 liegt. Die Kammzinken 81 sind durch Kammlücken 82 voneinander getrennt.

Auf die Stirnflächen 810 der Kammzinken 81 wird ein Substrat 1 mit einem aus Linsen 3 bestehenden Linsenarray so aufgebracht, daß jede Linse 3 dieses Arrays der Stirnfläche 610 eines zugeordneten integrierten Wellenleiters 61 gegenüberliegt.

Die Vereinzelung der Module kann durch eine Durchtrennung der Anordnung längs der Linien $b_0$, $b_1$, $b_2$, $b_3$ usw. auf einfache Weise vorgenommen werden, beispielsweise durch Laserschneiden oder Trockenätzen.

Auf der von der Stirnfläche 810 der Kammzinken 81 abgekehrten Oberfläche 10 des Substrats 1 sind die Linsen vorteilhafterweise aus Bodenflächen 111 von Vertiefungen 110 herausgearbeitet, deren jeweiliger Durchmesser D im wesentlichen dem Außendurchmesser D1 einer anzukoppelnden Faser 7, beispielsweise einer Monomodefaser mit einem Kern 72 und einem Mantel 71, entspricht. Diese Vertiefung 110, die einfach herstellbar ist und in welche die Faser 7 einsetzbar und fixierbar ist, stellt eine hervorragende Justierhilfe zum Justieren der Faser 7 gegenüber der Linse 3 dar. Der wirksame Durchmesser D3 der Linse 3 bestimmt sich von Fall zu Fall und kann beispielsweise etwa gleich dem Durchmesser D2 des Kerns 72 der Faser 7 oder etwas größer sein.

## Ansprüche

1. Verfahren zur Herstellung einer optischen Linse (3), **dadurch gekennzeichnet, daß** aus einer Oberfläche (10) eines Substrats (1) ein Linsenprofil (30) mittels eines Energiestrahl-Materialabtragverfahrens herausgeformt wird, bei dem mit Hilfe eines Energiestrahls (5) Material abgetragen wird, wobei der Materialabtrag im wesentlichen nur im Bereich des Strahls (5) erfolgt.

2. Verfahren nach Anspruch 1, **dadurch gekennzeichnet,** daß ein Substrat (1) aus Silizium verwendet wird.

3. Verfahren nach Anspruch 1 oder 2, **dadurch gekennzeichnet,** daß der Materialabtrag durch Ionenstrahlätzen erfolgt.

4. Verfahren nach einem der vorhergehenden Ansprüche, **dadurch gekennzeichnet,** daß der Materialabtrag durch laserinduziertes Ätzen erfolgt.

5. Verfahren nach einem der vorhergehenden Ansprüche zur Erzeugung einer rotationssymmetrischen Linse (3), **dadurch gekennzeichnet,** daß ein Materialabtrag durch einen unter schrägem Einfallswinkel ($\alpha$) auf die Oberfläche (10) einfallenden Strahl (5) begrenzten Querschnitts (51) erfolgt, wobei der Strahl (5) und das Substrat (1) relativ zueinander gedreht werden.

6. Verfahren nach Anspruch 5, insbesondere nach Anspruch 2 und 4, daß der Querschnitt (51) des Strahls (5) durch eine Aperturblende (20) begrenzt ist.

7. Verfahren nach Anspruch 6, **dadurch gekennzeichnet,** daß die Aperturblende (20) durch eine auf der Oberfläche (10) des Substrats (1) aufgebrachten Maske (2) definiert ist.

8. Verfahren nach einem der vorhergehenden Ansprüche, insbesondere nach einem der Ansprüche 5 bis 7, **dadurch gekennzeichnet,** daß der Strahl (5) ein Parallelstrahl ist.

9. Verfahren nach einem der Ansprüche 5 bis 8, **dadurch gekennzeichnet,** daß der Einfallswinkel ($\alpha$) des Strahls (5) während der Herausformung des Linsenprofils (30) verändert wird.

10. Verfahren nach Anspruch 9 zur Erzeugung einer sammelnden Stufenprofillinse (3), **dadurch gekennzeichnet,** daß der Einfallswinkel ($\alpha$) des Strahls (5) stufenweise vergrößert wird.

11. Verfahren nach einem der vorhergehenden Ansprüche, **dadurch gekennzeichnet,** daß auf der Oberfläche (10) des Substrats (1) eine Vielzahl gleicher oder/und verschiedener Linsenprofile (30) herausgeformt werden.

12. Verfahren nach Anspruch 11, **dadurch gekennzeichnet,** daß die Vielzahl von Linsenprofilen (30) gleichzeitig aus der Oberfläche (10) des Substrats (1) herausgeformt werden.

13. Verfahren nach einem der vorhergehenden Ansprüche, **dadurch gekennzeichnet,** daß ein Linsenprofil (30) aus einer Bodenfläche (101) einer in der Oberfläche (10) des Substrats (1) ausgebildeten Vertiefung (110) mit einem Durchmesser (D) herausgeformt wird, der im wesentlichen dem Außendurchmesser (D1) eines Glasfaserlichtwellenleiters (7) entspricht.

FIG 1

FIG 2

FIG 3

FIG 4

FIG 5

FIG 6

FIG 7

EP 0 398 082 A1

FIG 8

FIG 9

FIG 10

FIG 11

FIG 12

FIG 13

FIG 14

**FIG 15**

**FIG 16**

## EINSCHLÄGIGE DOKUMENTE

EP 90108382.4

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | <u>DE - A1 - 3 734 656</u> (ALERGAN) <br> * Spalte 4, Zeile 18 - Spalte 6, Zeile 32 * <br> -- | 1,2,4, 6-8 | G 02 B 3/00 <br> G 02 B 3/08 <br> B 23 K 26/06 <br> B 23 K 26/08 |
| A | <u>US - A - 4 563 565</u> (KAMPFER et al.) <br> * Abstract; Fig. 1-5 * <br> -- | 1,4,5, 9,10 | |
| A | <u>WO - A1 - 82/01 494</u> (OPITK INNOVATION) <br> * Spalte 2, Zeile 30 - Spalte 4, Zeile 6; Seite 4, Zeile 12 - Seite 5, Zeile 28 * <br> -- | 1,4,5 | |
| A | <u>US - A - 4 609 259</u> (SUEMITSU et al.) <br> * Abstract; Fig. 6-9; Spalte 1, Zeilen 6-64 * <br> ---- | 1-3,11 | |

RECHERCHIERTE SACHGEBIETE (Int Cl⁵)

G 02 B 3/00
B 23 K 26/00
C 03 C 15/00
C 03 B 33/00

Der vorliegende Recherchenbericht wurde für alle Patentansprüche erstellt

| Recherchenort | Abschlußdatum der Recherche | Prüfer |
|---|---|---|
| WIEN | 21-08-1990 | GRONAU |